# EUROPEAN PATENT SPECIFICATION

(11) **EP 2 601 223 B1**
(45) Date of publication and mention of the grant of the patent: **17.01.2018**
(21) Application number: 11739079.9
(22) Date of filing: 04.08.2011
(51) Int. Cl.: C08F 10/06, C08F 4/651, C08F 4/646

(54) **CATALYST COMPONENTS FOR THE POLYMERIZATION OF OLEFINS**
KATALYSATORKOMPONENTEN ZUR OLEFINPOLYMERISATION
COMPOSANTS DE CATALYSEUR POUR LA POLYMÉRISATION D'OLÉFINES

(30) Priority: 10.08.2010 US 401240 P; 05.08.2010 EP 10171999
(43) Date of publication of application: 12.06.2013
(73) Proprietor: Basell Poliolefine Italia S.r.l., 20127 Milano (IT)
(72) Inventor: MIGNOGNA, Alessandro, I-40121 Bologna (IT); BALBONI, Davide, I-44122 Ferrara (IT); CRISTOFORI, Antonio, I-44122 Ferrara (IT); GUIDOTTI, Simona, I-40121 Bologna (IT); MORINI, Giampiero, I-44122 Ferrara (IT); PATER, Jochem T. M., I-44020 Ferrara (IT)
(74) Representative: Giberti, Stefano
(86) International application number: PCT/EP2011/063447
(87) International publication number: WO 2012/017038

(56) References cited:
- WO-A1-03/068723
- US-A1- 2005 239 636

## Description

The present invention relates to catalyst components for the polymerization of olefins, in particular propylene, comprising a Mg dihalide based support on which are supported Ti atoms and an electron donor selected from a specific class of diolesters, said Ti atoms and electron donor being in specified molar ratio. The present invention further relates to the catalysts obtained from said components and to their use in processes for the polymerization of olefins in particular propylene.

Catalyst components for the stereospecific polymerization of olefins are widely known in the art. Concerning the polymerization of propylene, the most spread out catalyst family belongs to the Ziegler-Natta category and in general terms it comprises a solid catalyst component, constituted by a magnesium dihalide on which are supported a titanium compound and an internal electron donor compound, used in combination with an Al-alkyl compound. Conventionally however, when a higher crystallinity of the polymer is required, also an external donor (for example an alkoxysilane) is needed in order to obtain higher isotacticity. One of the preferred classes of internal donors is constituted by the esters of phthalic acid, diisobutylphthalate being the most used. The phthalates are used as internal donors in combination with alkylalkoxysilanes as external donor. This catalyst system gives good performances in terms of activity, isotacticity and xylene insolubility.

One of the problems associated with the use of this catalyst system is that the phthalates have recently raised concerns due to the medical issues associated with their use and some compounds within this class have been classified as source of heavy health problems. Consequently, research activities have been devoted to discover alternative classes of internal donors for use in the preparation of catalyst components for propylene polymerization. Among the various classes of donors tested, the broad class of diesters of diols described in US 7,388,061 is one of the most interesting. In this document, esters belonging to the formula R₁-CO-O-CR₃R₄-A-CR₅R₆-O-CO-R₂ in which R₁ and R₂ groups, which may be identical or different, can be substituted or unsubstituted hydrocarbyl having 1 to 20 carbon atoms, R₃-R₆ groups, which may be identical or different, can be selected from the group consisting of hydrogen, halogen or substituted or unsubstituted hydrocarbyl having 1 to 20 carbon atoms, R₁-R₆ groups optionally contain one or more hetero-atoms replacing carbon, hydrogen atom or the both, said hetero-atom is selected from the group consisting of nitrogen, oxygen, sulfur, silicon, phosphorus and halogen atom, two or more of R₃-R₆ groups can be linked to form saturated or unsaturated monocyclic or polycyclic ring; A is a single bond or bivalent linking group with chain length between two free radicals being 1-10 atoms, wherein said bivalent linking group is selected from the group consisting of aliphatic, alicyclic and aromatic bivalent radicals, and can carry C1-C20 linear or branched substituents; one or more of carbon atoms and/or hydrogen atoms on above-mentioned bivalent linking group and substituents can be replaced by a hetero-atom selected from the group consisting of nitrogen, oxygen, sulfur, silicon, phosphorus, and halogen atom, and two or more said substituents on the linking group as well as above-mentioned R₃-R₆ groups can be linked to form saturated or unsaturated monocyclic or polycyclic ring.

The examples reported in the document seem to show in general good activity and stereospecificity for this class. From the reported data, it results a great variance of performances depending on the internal donor, ranging from very good performing structures to very poorly performing ones both in terms of activity and stereospecificity (see examples 68 and 86). From a review of the examples, it results that the donor/Ti molar ratio is generally higher than 0.5 and that good activity and stereospecificity are obtained in general for donor/Ti molar ratios of higher than 0.6. In fact, when, for a certain donor, the ratio is lowered to less than 0.5, a dramatic decrease in stereospecificity is observed (see comparison between example 57 and 91). This is a disadvantage because in the attempt of increasing the titanium amount in order to try to increase the activity, one should be forced to also increase the amount of donor in order not to loose stereocontrol. Of course, this is not very efficient due to the fact that using higher amounts of donor, in addition to increase costs, also involves formation of higher quantity of by-products and necessity to work under more diluted conditions. In addition, an elevated amount of donor also causes morphology problems in the catalyst preparation (formation of aggregates) which may reflect on the final polymer.

It would be therefore important to have a catalyst able to maintain high activity and stereospecificity even at reduced donor/Ti molar ratios.

Surprisingly, the applicant has found that a particular subgroup of donors is able to give good performance in terms of activity and stereospecificity also when the donor/Ti molar ratio is lower than 0.65.

Accordingly, it is an object of the present invention a catalyst component for the polymerization of olefins comprising Mg, Ti and an electron donor of formula 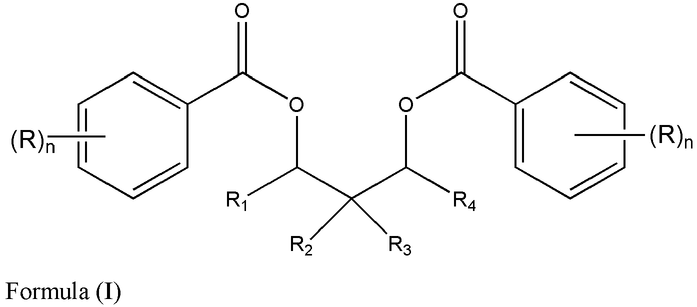 in which R, R₁ and R₄ groups, equal to or different from each other, are C₁-C₁₅ hydrocarbon groups and the R groups can be linked to form a cycle, R₂-R₃ groups, equal to or different from each other, are selected from hydrogen and C₁-C₁₅ hydrocarbon groups, the R₁-R₄ groups can optionally contain an heteroatom selected from halogen, P, S, N,O and Si, n is an integer from 0 to 5 and said electron donor and Ti atoms being present in an amount such that their molar ratio is equal to, or lower than, 0.65.

Preferably, R₁ and R₄ are independently selected from C₁-C₁₅ alkyl groups, C₆-C₁₄ aryl groups, C₃-C₁₅ cycloalkyl groups, and C₇-C₁₅ arylalkyl or alkylaryl groups. More preferably, R₁ and R₄ are selected from C₁-C₁₀ alkyl groups and even more preferably from C₁-C₅ alkyl groups in particular methyl.

Preferably, R₂-R₃ groups are independently selected from hydrogen, C₁-C₁₅ alkyl groups, C₆-C₁₄ aryl groups, C₃-C₁₅ cycloalkyl groups, and C₇-C₁₅ arylalkyl or alkylaryl groups. More preferably, R₂ and R₃ are selected from hydrogen or C₁-C₁₀ alkyl groups and even more preferably from hydrogen or C₁-C₅ alkyl groups in particular methyl. In one preferred embodiment hydrogen and methyl are preferred. In one particular preferred embodiment both R₂ and R₃ are hydrogen.

Preferably, R groups are selected from C₁-C₁₅ alkyl groups, C₆-C₁₄ aryl groups, C₃-C₁₅ cycloalkyl groups, and C₇-C₁₅ arylalkyl or alkylaryl groups. More preferably, R are selected from C₁-C₁₀ alkyl groups and even more preferably from C₁-C₅ alkyl groups. Among them particularly preferred are methyl, ethyl, n-propyl and n-butyl. The index n can vary from 0 to 5 inclusive, preferably it ranges from 1 to 3 and more preferably is 1. When n is 1, the substituent R is preferably in position 4 of the benzoate ring.

Preferred structures of Formula (I) are those in which simultaneously R₁ and R₄ are methyl, R₂ and R₃ are hydrogen and n is 1 and the R groups, which are in position 4 of the benzene ring are methyl, ethyl, n-propyl or n-butyl.

Preferably the amount of electron donor of Formula (I) is such that the electron donor /Ti molar ratio is lower than 0.6, more preferably lower than 0.55 and especially lower than 0.5.

The amount of Ti atoms in the catalyst component is preferably higher than 3%wt more preferably higher than 3.5% with respect to the total weight of said catalyst component.

Non limiting examples of Formula (I) are the following: 2,4-pentanediol dibenzoate, 3-methyl-2,4-pentanediol dibenzoate, 3-ethyl-2,4-pentanediol dibenzoate, 3-n-propyl-2,4-pentanediol dibenzoate, 3-i-propyl-2,4-pentanediol dibenzoate, 3-n-butyl-2,4-pentanediol dibenzoate, 3-i-butyl-2,4-pentanediol dibenzoate, 3-t-butyl-2,4-pentanediol dibenzoate, 3-n-pentyl-2,4-pentanediol dibenzoate, 3-i-pentyl-2,4-pentanediol dibenzoate, 3-cyclopentyl-2,4-pentanediol dibenzoate, 3-cyclohexyl-2,4-pentanediol dibenzoate, 3-phenyl-2,4-pentanediol dibenzoate, 3-(2-naphtyl)-2,4-pentanediol dibenzoate, 3-allyl-2,4-pentanediol dibenzoate, 3,3-dimethyl-2,4-pentanediol dibenzoate, 3-ethyl-3-methyl-2,4-pentanediol dibenzoate, 3-methyl-3-i-propyl-2,4-pentanediol dibenzoate, 3,3-diisopropyl-2,4-pentanediol dibenzoate, 3-i-pentyl-2-i-propyl-2,4-pentanediol dibenzoate, 3,5-heptanediol dibenzoate, 4,6-nonanediol dibenzoate, 2,6-dimethyl-3,5-heptanediol 01 dibenzoate, 5,7-undecanediol dibenzoate, 2,8-dimethyl-4,6-nonanediol dibenzoate, 2,2,6,6,tetramethyl-3,5-hetanediol dibenzoate, 6,8-tridecanediol dibenzoate, 2,10-dimethyl-5,7-undecanediol dibenzoate, 1,3-dicyclopentyl-1,3-propanediol dibenzoate, 1,3-dicyclohexyl-1,3-propanediol dibenzoate, 1,3-diphenyl-1,3-propanediol dibenzoate, 1,3-bis(2-naphtyl)-1,3-propanediol dibenzoate, 2,4-hexanediol dibenzoate, 2,4-heptanediol dibenzoate, 2-methyl-3,5-hexanediol dibenzoate, 2,4-octanediol dibenzoate, 2-methyl-4,6-heptanediol dibenzoate, 2,2-dimethyl-3,5-hexanediol dibenzoate, 2-methyl-5,7-octanediol dibenzoate, 2,4-nonanediol dibenzoate, 1-cyclopentyl-1,3-butanediol dibenzoate, 1-cyclohexyl-1,3-butanediol dibenzoate, 1-phenyl-1,3-butanediol dibenzoate, 1-(2-naphtyl)-1,3-butanediol dibenzoate, 2,4-pentanediol-bis(4-methylbenzoate), 2,4-pentanediol-bis(3-methylbenzoate), 2,4-pentanediol-bis(4-ethylbenzoate), 2,4-pentanediol-bis(4-n-propylbenzoate), 2,4-pentanediol-bis(4-n-butylbenzoate), 2,4-pentanediol-bis(4-i-propylbenzoate), 2,4-pentanediol-bis(4-i-butylbenzoate), 2,4-pentanediol-bis(4-t-butylbenzoate), 2,4-pentanediol-bis(4-phenylbenzoate), 2,4-pentanediol-bis(3,4-dimethylbenzoate), 2,4-pentanediol-bis(2,4,6-trimethylbenzoate), 2,4-pentanediol-bis(2,6-dimethylbenzoate), 2,4-pentanediol-di-2-naphtoate, 3-methyl-2,4-pentanediol-bis(4-n-propylbenzoate), 3-i-pentyl-2,4-pentanediol-bis(4-n-propylbenzoate), 1,1,1,5,5,5-hexafluoro-2,4-pentanediol-bis(4-ethylbenzoate), 1,1,1-trifluoro-2,4-pentanediol-bis(4-ethylbenzoate), 1,3-bis(4-chlorophenyl)-1,3-propanediol-bis(4-ethylbenzoate), 1-(2,3,4,5,6-pentafluorophenyl)-1,3-butanediol-bis(4-ethylbenzoate), 1,1-difluoro-4-phenyl-2,4-butandiol-bis(4-n-propylbenzoate), 1,1,1-trifluoro-5,5-dimethyl-2,4-hexandiol-bis(4-n-propylbenzoate), 1,1,1-trifluoro-4-(2-furyl)-2,4-butandiol-bis(4-n-propylbenzoate), 1,1,1-trifluoro-4-phenyl-2,4-butandiol-bis(4-n-propylbenzoate), 1,1,1-trifluoro-4-(2-thienyl)-2,4-butandiol-bis(4-n-propylbenzoate), 1,1,1-trifluoro-4-(4-chlorophenyl)-2,4-butandiol-bis(4-n-propylbenzoate), 1,1,1-trifluoro-4-(2-naphtyl)-2,4-butandiol-bis(4-n-propylbenzoate), 3-chloro-2,4-pentandiol-bis(4-n-propylbenzoate).

The compounds falling in formula (A) can be prepared according to generally available chemical routes such as that described in US 7,388,061.

Very surprisingly it has been found that for the catalyst components of the invention the lower donor/Ti molar ratio does not bring a worsening of the stereospecificity. On the contrary, the activity/stereospecificity balance is substantially improved.

As explained above, the catalyst components of the invention comprise, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably MgCl₂ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are TiCl₄ and TiCl₃; furthermore, also Ti-haloalcoholates of formula Ti(OR)_{m-y}X_{y} can be used, where m is the valence of titanium, y is a number between 1 and m-1, X is halogen and R is a hydrocarbon radical having from 1 to 10 carbon atoms.

The preparation of the solid catalyst component can be carried out according to several methods. One method comprises the reaction between magnesium alcoholates or chloroalcoholates (in particular chloroalcoholates prepared according to USP 4,220,554) and an excess of TiCl₄ in the presence of the electron donor compounds at a temperature of about 80 to 120°C.

According to a preferred method, the solid catalyst component can be prepared by reacting a titanium compound of formula Ti(OR)_{m-y}X_{y}, where m is the valence of titanium and y is a number between 1 and m, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold TiCl₄ (generally 0°C); the mixture is heated up to 80-130°C and kept at this temperature for 0.5-2 hours. The treatment with TiCl₄ can be carried out one or more times. The electron donor compound is preferably added during the treatment with TiCl₄. The preparation of catalyst components in spherical form are described for example in European Patent Applications EP-A-395083, EP-A-553805, EP-A-553806, EPA601525 and WO98/44001.

The solid catalyst components obtained according to the above method show a surface area (by B.E.T. method) generally between 20 and 500 m²/g and preferably between 50 and 400 m²/g, and a total porosity (by B.E.T. method) higher than 0.2 cm³/g preferably between 0.2 and 0.6 cm³/g. The porosity (Hg method) due to pores with radius up to 10.000Å generally ranges from 0.3 to 1.5 cm³/g, preferably from 0.45 to 1 cm³/g.

The solid catalyst component has an average particle size ranging from 5 to 120 µm and more preferably from 10 to 100 µm.

In any of these preparation methods the desired electron donor compounds can be added as such or, in an alternative way, it can be obtained *in situ* by using an appropriate precursor capable to be transformed in the desired electron donor compound by means, for example, of known chemical reactions such as etherification, alkylation, esterification, etc.

Regardless to the preparation method, the final amount of electron donor compounds is such that the molar ratio with respect to the MgCl₂ is from 0.01 to 1, preferably from 0.05 to 0.5. The solid catalyst components according to the present invention are converted into catalysts for the polymerization of olefins by reacting them with organoaluminum compounds according to known methods.

In particular, it is an object of the present invention a catalyst for the polymerization of olefins CH₂=CHR, in which R is hydrogen or a hydrocarbyl radical with 1-12 carbon atoms, comprising the product obtained by contacting:
(i) the solid catalyst component as disclosed above and
(ii) an alkylaluminum compound.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

Suitable external electron-donor compounds include silicon compounds, ethers, esters, amines, heterocyclic compounds and particularly 2,2,6,6-tetramethylpiperidine and ketones.

Another class of preferred external donor compounds is that of silicon compounds of formula (R₇)ₐ(R₈)_{b}Si(OR₉)_{c}, where a and b are integers from 0 to 2, c is an integer from 1 to 4 and the sum (a+b+c) is 4; R₇, R₈, and R₉, are alkyl, cycloalkyl or aryl radicals with 1-18 carbon atoms optionally containing heteroatoms. Particularly preferred are the silicon compounds in which a is 1, b is 1, c is 2, at least one of R₇ and R₈ is selected from branched alkyl, cycloalkyl or aryl groups with 3-10 carbon atoms optionally containing heteroatoms and R₉ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R₈ is a branched alkyl or cycloalkyl group, optionally containing heteroatoms, and R₉ is methyl. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

Therefore, it constitutes a further object of the present invention a process for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component of the invention;
(ii) an alkylaluminum compound and,
(iii) optionally an electron-donor compound (external donor).

The polymerization process can be carried out according to known techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization is generally carried out at temperature of from 20 to 120°C, preferably of from 40 to 80°C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa.

The following examples are given in order to illustrate the invention without limiting it.

### CHARACTERIZATIONS

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Determination of donors.

The content of electron donor has been carried out via gas-chromatography.

### Melt flow rate (MFR)

The melt flow rate MIL of the polymer was determined according to ISO 1133 (230°C, 2.16 Kg)

### EXAMPLES

### Procedure for preparation of the spherical adducts A and B

An initial amount of microspheroidal MgCl₂·2.8C₂H₅OH was prepared according to the method described in Example 2 of WO98/44009, but operating on larger scale. This adduct is called Adduct A. This Adduct A was then subject to thermal dealcoholation at increasing temperatures from 30 to 130°C and operating in nitrogen flow until reaching an alcohol content of 2.1 moles per mol of MgCl₂. This adduct is called Adduct B.

### General procedure for the preparation of the solid catalyst component

Into a 500 ml round bottom flask, equipped with mechanical stirrer, cooler and thermometer 250 ml of TiCl₄ were introduced at room temperature under nitrogen atmosphere. After cooling to 0°C, while stirring, the internal donor and 10.0 g of Adduct B were sequentially added into the flask. The amount of charged internal donor was such to obtain a Mg/donor molar ratio of 8. The temperature was raised to 100°C and maintained for 2 hours. Thereafter, stirring was stopped, the solid product was allowed to settle and the supernatant liquid was siphoned off maintaining the temperature at 100°C. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off.

The solid was washed with anhydrous hexane six times (6 x 100 ml) in temperature gradient down to 60°C and one time (100 ml) at room temperature. The obtained solid was then dried under vacuum and analyzed. The amount of Ti bonded on the catalyst and the molar ratio between the titanium and electron donor bounded to the catalyst are depicted in Table 1.

### General procedure for the polymerization of propylene

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 ml of anhydrous hexane, 0.76 g of AlEt₃, 0.076 g of dicyclopentyldimethoxysilane (D donor) and 0.006÷0.010 g of solid catalyst component. The autoclave was closed; subsequently 2.0 N1 of hydrogen were added. Then, under stirring, 1.2 kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed and fractionated with o-xylene to determine the amount of the xylene insoluble (X.I.) fraction.

### Examples 1-7, and Comparative example 1

Various donors were used in the preparation of the solid catalyst component, following the description given above. The donors used are listed in Table 1.

The thus obtained solid catalyst components were analyzed for their composition, and were tested in polymerization of propylene, using the method described above. The results are listed in Table 1.

### Comparative example 2

The general procedure for preparation of the solid catalyst component was followed, with the exception that now the 9,9-bis(benzoyloxymethyl)fluorine was fed as internal donor, in such an amount to have Mg/ID molar ratio of 10. The obtained solid catalyst component was analyzed for its composition, and tested in polymerization of propylene, using the method described above. The results are listed in Table 1.

### Comparative example 3

The general procedure for preparation of the solid catalyst component was followed, with the exception that now the 2,4-pentanediol-diheptanoate was fed as internal donor, in such an amount to have Mg/ID molar ratio of 6. The obtained solid catalyst component was analyzed for its composition, and tested in polymerization of propylene, using the method described above. The results are listed in Table 1.

### Comparative example 4

A solid catalyst component was prepared according to the method describe above, with the following changes. The two titanation steps were both carried out at 100°C. The internal donor indicated in Table 1, was now charged in two separate amounts, one amount in every titanation step. Both the additions were such to have a molar ratio Mg/donor of 4. The molar ratio Mg/donor for the total amount of donor fed was thus 2.

**Table 1.**

| **Example** | **Internal donor** | | **Ti wt%** | **ID/Ti molar** | **Mileage kg/g** | **XI wt%** | **MIL g/10'** |
|---|---|---|---|---|---|---|---|
| | **Name** | **%wt** | | | | | |
| 1 | 2,4-pentanediol dibenzoate | 8.7 | 3.9 | 0.34 | 43 | 97.7 | 2.4 |
| 2 | 2,4-pentanediol bis(4-ethylbenzoate) | 14.9 | 4.1 | 0.48 | 56 | 97.7 | 2.7 |
| 3 | 2,4-pentanediol bis(4-n-propylbenzoate) | 15.1 | 3.8 | 0.48 | 58 | 98.0 | 2.2 |
| 4 | 2,4-pentanediol bis(4-n-butylbenzoate) | 14.5 | 4.2 | 0.39 | 75 | 98.0 | 1.8 |
| 5 | 3-methyl-2,4-pentanediol dibenzoate | 11.5 | 3.6 | 0.47 | 46 | 97.6 | 2.5 |
| 6 | 3-methyl-2,4-pentanediol bis(4-n-propylbenzoate) | 14.1 | 3.9 | 0.43 | 67 | 98.0 | 1.6 |
| 7 | 3-i-pentyl-2,4-pentanediol bis(4-n-propylbenzoate) | 12.0 | 4.5 | 0.27 | 59 | 98.1 | 1.9 |
| Comp. 1 | 2-i-pentyl-2-i-propyl-1,3-propanediol dibenzoate | 19.9 | 4.6 | 0.53 | 14 | 94.0 | 7.5 |
| Comp. 2 | 9,9-bis(benzoyloxymethyl) fluorene | N.D. | 6.1 | N.D | 22 | 93.1 | 3.6 |
| Comp. 3 | 2,4-pentanediol diheptanoate | N.D. | 4.0 | N.D. | 21 | 92.2 | 1.0 |
| Comp. 4 | 2,4-pentanediol dibenzoate | 29.2 | 6.7 | 0.67 | 9 | 97.6 | 2.0 |

| | | | | | | | |
|---|---|---|---|---|---|---|---|
| N.D. not detected | | | | | | | |

## Claims

1. A catalyst component for the polymerization of olefins comprising Mg, Ti, halogen and an electron donor compound of formula (I) 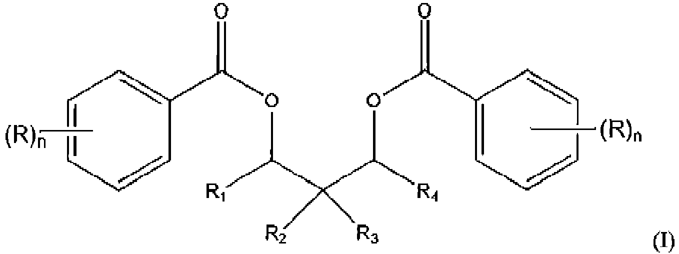 in which R, R₁ and R₄ groups, equal to or different from each other, are C₁-C₁₅ hydrocarbon groups and the R groups can be linked to form a cycle, R₂-R₃ groups, equal to or different from each other, are selected from hydrogen and C₁-C₁₅ hydrocarbon groups, the R₁-R₄ groups can optionally contain an heteroatom selected from halogen, P, S, N,O and Si, n is an integer from 0 to 5 and said electron donor and Ti atoms being present in an amount such that the electron donor/Ti molar is equal to, or lower than, 0.65,

2. The catalyst component according to claim 1 in which in the donor of formula (I) R₁ and R₄ are independently selected from C₁-C₁₅ alkyl groups, C₆-C₁₄ aryl groups, C₃-C₁₅ cycloalkyl groups, and C₇-C₁₅ arylalkyl or alkylaryl groups.

3. The catalyst component according to claim 2 in which R₁ and R₄ are selected from C₁-C₁₀ alkyl groups.

4. The catalyst component according to claim 1 in which R₂-R₃ groups independently are selected from hydrogen or C₁-C₁₀ alkyl groups.

5. The catalyst component according to claim 4 in which both R₂ and R₃ groups, independently, are hydrogen.

6. The catalyst component according to claim 1 in which R groups are selected from C₁-C₁₅ alkyl groups, C₆-C₁₄ aryl groups, C₃-C₁₅ cycloalkyl groups, and C₇-C₁₅ arylalkyl or alkylaryl groups.

7. The catalyst component according to claim 6 in which R groups are selected from C₁-C₅ alkyl groups.

8. The catalyst component according to claim 1 in which the index n ranges from 1 to 3.

9. The catalyst component according to claim 1 in which n is 1 and the substituent R is in position 4 of the benzoate ruing.

10. The catalyst component according to claim 1 in which the electron donor /Ti molar ratio is lower than 0.6.

11. The catalyst component according to claim 1 in which the amount of Ti atoms in the catalyst component is higher than 3%wt based on the total weight of the solid catalyst component.

12. A catalyst for the polymerization of olefins comprising the product of the reaction between:
(i) the solid catalyst component according to any of the preceding claims and
(ii) an alkylaluminum compound.

13. The catalyst according to claim 12 further comprising an external electron donor compound.

14. The catalyst according to claim 13 in which the external electron donor compound is selected from silicon compounds of formula. Rₐ⁵R_{b}⁶Si(OR⁷)_{c}, where a and b are integer from 0 to 2, c is an integer from 1 to 4 and the sum (a+b+c) is 4; R⁵, R⁶ and R⁷ are alkyl, cycloalkyl or aryl radicals with 1-18 carbon atoms optionally containing heteroatoms.

15. A process for the (co)polymerization of olefins CH₂=CHR, in which R is hydrogen or a hydrocarbyl radical with 1-12 carbon atoms, carried out in the presence of a catalyst system comprising the product of the reaction between:
(i) the solid catalyst component according to any of the proceeding claims;
(ii) an alkylaluminum compound and,
(iii) optionally an external donor compound.

## Patentansprüche

1. Katalysatorkomponente zur Polymerisation von Olefinen, umfassend Mg, Ti, Halogen und eine Elektronendonorverbindung mit der Formel (I) 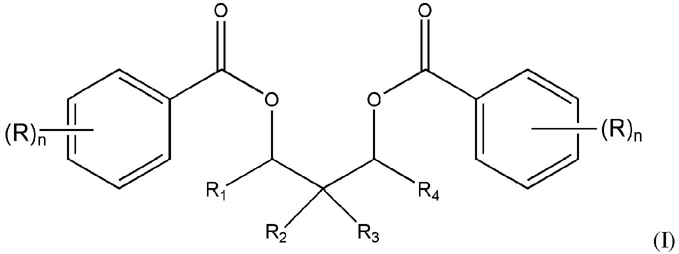 in der die Gruppen R, R₁ und R₄, die gleich oder voneinander verschieden sind, C₁-C₁₅-Kohlenwasserstoffgruppen sind, und die Gruppen R unter Bildung eines Cyclus verknüpft sein können, die Gruppen R₂-R₃, die gleich oder voneinander verschieden sind, ausgewählt sind aus Wasserstoff und C₁-C₁₅-Kohlenwasserstoffgruppen, die Gruppen R₁-R₄ gegebenenfalls ein Heteroatom ausgewählt aus Halogen, P, S, N,O und Si enthalten können, n eine ganze Zahl von 0 bis 5 ist, und der Elektronendonor und die Ti-Atome in einer solchen Menge vorhanden sind, dass das Molverhältnis von Elektronendonor/Ti gleich oder kleiner als 0,65 ist.

2. Katalysatorkomponente nach Anspruch 1, wobei in dem Donor der Formel (I) R₁ und R₄ unabhängig ausgewählt sind aus C₁-C₁₅-Alkylgruppen, C₆-C₁₄-Arylgruppen, C₃-C₁₅-Cycloalkylgruppen und C₇-C₁₅-Arylalkyl- oder -Alkylarylgruppen.

3. Katalysatorkomponente nach Anspruch 2, wobei R₁ und R₄ ausgewählt sind aus C₁-C₁₀-Alkylgruppen.

4. Katalysatorkomponente nach Anspruch 1, wobei die Gruppen R₂-R₃ unabhängig ausgewählt sind aus Wasserstoff und C₁-C₁₀-Alkylgruppen.

5. Katalysatorkomponente nach Anspruch 4, wobei beide der Gruppen R₂ und R₃ unabhängig Wasserstoff sind.

6. Katalysatorkomponente nach Anspruch 1, wobei die Gruppen R ausgewählt sind aus C₁-C₁₅-Alkylgruppen, C₆-C₁₄-Arylgruppen, C₃-C₁₅-Cycloalkylgruppen und C₇-C₁₅-Arylalkyl- oder -Alkylarylgruppen.

7. Katalysatorkomponente nach Anspruch 6, wobei die Gruppen Rausgewählt sind aus C₁-C₅-Alkylgruppen.

8. Katalysatorkomponente nach Anspruch 1, wobei der Index n im Bereich von 1 bis 3 liegt.

9. Katalysatorkomponente nach Anspruch 1, wobei n 1 ist und der Substituent R in Position 4 des Benzoatrings ist.

10. Katalysatorkomponente nach Anspruch 1, wobei das molare Verhältnis von Elektronendonor/Ti niedriger als 0,6 ist.

11. Katalysatorkomponente nach Anspruch 1, wobei die Menge der Ti-Atome in der Katalysatorkomponente höher als 3 Gew.% ist, bezogen auf das Gesamtgewicht der festen Katalysatorkomponente.

12. Katalysator zur Polymerisation von Olefinen, umfassend das Produkt der Reaktion zwischen:
(i) der festen Katalysatorkomponente gemäß einem der vorhergehenden Ansprüche und
(ii) einer Alkylaluminiumverbindung.

13. Katalysator nach Anspruch 12, ferner umfassend eine externe Elektronendonorverbindung.

14. Katalysatorkomponente nach Anspruch 13, wobei die externe Elektronendonorverbindung ausgewählt ist aus Siliciumverbindungen der Formel Rₐ⁵R_{b}⁶Si(OR⁷)_{c}, wobei a und b ganze Zahlen von 0 bis 2 sind, c eine ganze Zahl von 1 bis 4 ist und die Summe aus (a+b+c) 4 ist; R⁵, R⁶ und R⁷ Alkyl-, Cycloalkyl- oder Arylreste mit 1 bis 18 Kohlenstoffatomen sind, die gegebenenfalls Heteroatome enthalten.

15. Verfahren zur (Co)polymerisation von Olefinen CH₂=CHR, wobei R Wasserstoff oder ein Kohlenwasserstoffrest mit 1-12 Kohlenstoffatomen ist, welches in Gegenwart eines Katalysatorsystems durchgeführt wird, welches das Produkt der Reaktion zwischen
(i) der festen Katalysatorkomponente gemäß einem der vorhergehenden Ansprüche;
(ii) einer Alkylaluminiumverbindung und
(iii) gegebenenfalls einer externen Donorverbindung umfasst.

## Revendications

1. Composant catalyseur pour la polymérisation d'oléfines comprenant Mg, Ti, halogène et un composé donneur d'électrons de formule (I) 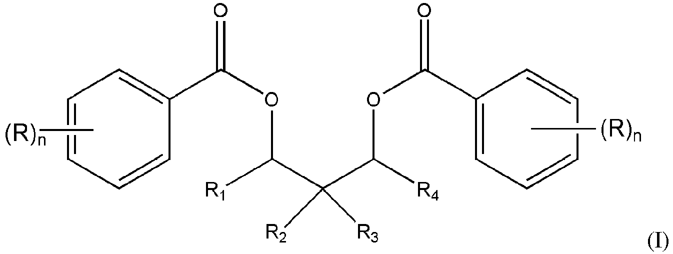 dans lequel les groupes R, R₁ et R₄, égaux ou différents les uns par rapport aux autres, sont des groupes hydrocarbonés en C₁ à C₁₅ et les groupes R peuvent être liés pour former un cycle, les groupes R₂ à R₃, égaux ou différents les uns par rapport aux autres, sont choisis parmi l'hydrogène et des groupes hydrocarbonés en C₁ à C₁₅, les groupes R₁ à R₄ peuvent éventuellement contenir un hétéroatome choisi parmi un halogène, P, S, N, O et Si, n est un nombre entier allant de 0 à 5 et ledit donneur d'électrons et les atomes de Ti étant présents en une quantité telle que le rapport molaire donneur d'électrons/Ti est égal ou inférieur à 0,65.

2. Composant catalyseur selon la revendication 1, dans lequel, dans le donneur de formule (I) R₁ et R₄ sont indépendamment choisis parmi des groupes alkyle en C₁ à C₁₅, des groupes aryle en C₆ à C₁₄, des groupes cycloalkyle en C₃ à C₁₅ et des groupes arylalkyle ou alkylaryle en C₇ à C₁₅.

3. Composant catalyseur selon la revendication 2, dans lequel R₁ et R₄ sont choisis parmi des groupes alkyle en C₁ à C₁₀.

4. Composant catalyseur selon la revendication 1, dans lequel les groupes R₂ à R₃ sont indépendamment choisis parmi l'hydrogène ou des groupes alkyle en C₁ à C₁₀.

5. Composant catalyseur selon la revendication 4, dans lequel l'un et l'autre des groupes R₂ et R₃, indépendamment, sont l'hydrogène.

6. Composant catalyseur selon la revendication 1, dans lequel les groupes R sont choisis parmi des groupes alkyle en C₁ à C₁₅, des groupes aryle en C₆ à C₁₄, des groupes cycloalkyle en C₃ à C₁₅ et des groupes arylalkyle ou alkylaryle en C₇ à C₁₅.

7. Composant catalyseur selon la revendication 6, dans lequel les groupes R sont choisis parmi des groupes alkyle en C₁ à C₅.

8. Composant catalyseur selon la revendication 1, dans lequel l'indice n va de 1 à 3.

9. Composant catalyseur selon la revendication 1, dans lequel n vaut 1 et le substituant R est en position 4 du cycle benzoate.

10. Composant catalyseur selon la revendication 1, dans lequel le rapport molaire donneur d'électrons/Ti est inférieur à 0,6.

11. Composant catalyseur selon la revendication 1, dans lequel la quantité d'atomes de Ti dans le composant catalyseur représente plus de 3 % en poids sur la base du poids total du composant catalyseur solide.

12. Catalyseur pour la polymérisation d'oléfines, comprenant le produit de la réaction entre :
(i) le composant catalyseur solide selon l'une quelconque des revendications précédentes et
(ii) un composé alkylaluminium.

13. Catalyseur selon la revendication 12, comprenant en outre un composé donneur d'électrons externe.

14. Catalyseur selon la revendication 13, dans lequel le composé donneur d'électrons externe est choisi parmi des composés de silicium de formule Rₐ⁵R_{b}⁶Si(OR⁷)_{c}, où a et b sont un nombre entier allant de 0 à 2, c est un nombre entier allant de 1 à 4 et la somme (a+b+c) vaut 4 ; R⁵, R⁶ et R⁷ sont des radicaux alkyle, cycloalkyle ou aryle avec 1 à 18 atomes de carbone, contenant éventuellement des hétéroatomes.

15. Procédé de (co)polymérisation d'oléfines CH₂=CHR, dans lequel R est un hydrogène ou un radical hydrocarbyle avec 1 à 12 atomes de carbone, effectué en présence d'un système de catalyseur comprenant le produit de la réaction entre :
(i) le composant catalyseur solide selon l'une quelconque des revendications précédentes ;
(ii) un composé alkylaluminium et,
(iii) éventuellement un composé donneur externe.
